(19) Europäisches Patentamt / European Patent Office / Office européen des brevets

(11) EP 4 759 888 A1

(12) # EUROPEAN PATENT APPLICATION
published in accordance with Art. 153(4) EPC

(43) Date of publication:
**17.06.2026 Bulletin 2026/25**

(21) Application number: **24851426.7**

(22) Date of filing: **24.06.2024**

(51) International Patent Classification (IPC):
***C09D 11/326*** (2014.01) ***B41J 2/01*** (2006.01)
***B41M 5/00*** (2006.01) ***C09D 11/38*** (2014.01)
***C09D 11/101*** (2014.01) ***C09D 11/324*** (2014.01)

(52) Cooperative Patent Classification (CPC):
**B41J 2/01; B41M 5/00; C09D 11/101; C09D 11/324; C09D 11/326; C09D 11/38**

(86) International application number:
**PCT/JP2024/022789**

(87) International publication number:
**WO 2025/032993 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 JP 2023130650**

(71) Applicant: **Sakata INX Corporation**
**Osaka-shi, Osaka 541-0047 (JP)**

(72) Inventors:
- **FUKE, Kazuhiro**
  **Osaka-shi, Osaka 541-0047 (JP)**
- **OGASAHARA, Koki**
  **Osaka-shi, Osaka 541-0047 (JP)**
- **SHIOZAKI, Daigo**
  **Osaka-shi, Osaka 541-0047 (JP)**
- **KINJOH, Jun**
  **Osaka-shi, Osaka 541-0047 (JP)**
- **NAKASHIMA, Okinori**
  **Osaka-shi, Osaka 541-0047 (JP)**

(74) Representative: **Müller-Boré & Partner Patentanwälte PartG mbB**
**Friedenheimer Brücke 21**
**80639 München (DE)**

(54) **PHOTOCURABLE INK COMPOSITION FOR INKJET PRINTING**

(57) It is an object to provide a photocurable ink composition for inkjet printing containing a pigment and a pigment dispersant, wherein the photocurable ink composition exhibits high adhesion between its printed layer and a target base printing material and has high dispersion stability of the pigment in the ink composition and improved storage stability and to provide a photocurable ink composition for inkjet printing containing a pigment and a pigment dispersant, wherein the photocurable ink composition exhibits high adhesion between its printed layer and a target base printing material and high water resistance of the printed layer and has high dispersion stability of the pigment in the ink composition and improved storage stability. As a solution, provided is a photocurable ink composition for inkjet printing containing a pigment, a pigment dispersant, a photopolymerization initiator, and a photopolymerizable compound, wherein the photopolymerizable compound contains a hydrophilic monofunctional monomer and a phosphate (meth)acrylate, the phosphate (meth)acrylate is included in an amount of 0.1 to 4.3 mass% based on the entire ink composition, and the pigment dispersant is included in an amount of 38 to 100 parts by mass based on 100 parts by mass of the pigment.

EP 4 759 888 A1

## Description

Technical Field

The present invention relates to a photocurable ink composition for inkjet printing.

Background Art

Photocurable ink compositions for inkjet printing are used in printing for various base materials. Inkjet printing does not require plates and is therefore advantageous for small lot production, and also photocurable (typically, UV curable) ink compositions can decrease the contents of organic solvents therein and therefore have an environmental benefit in that VOC emissions can be reduced.

In printing with a photocurable ink composition for inkjet printing, a printed layer composed of a cured coating film is formed on a target base printing material by depositing ink droplets on the target base printing material and irradiating each of the ink droplets with light to cure it. On this occasion, the adhesion between the printed layer composed of the cured coating film and the surface of the target base printing material may not be sufficient depending on the material of the target base printing material, the composition of the ink composition, and so on.

In contrast, as a means for increasing the adhesion between a printed layer made of a photocurable ink composition for inkjet printing and the surface of a target base printing material, it is proposed to blend a polymerizable compound including a phosphate group or a polymerizable phosphate compound with the ink composition (PTLs 1 and 2). PTL 1 proposes to blend a polymerizable compound including a phosphate group with an active energy ray curable inkjet ink composition containing a polymerizable compound and a dye as a coloring agent. PTL 2 proposes to use, in an inkjet ink composition that includes a polymerizable monomer including a polymerizable phosphate compound and a photopolymerization initiator, an acylphosphine acid oxide-based initiator as the photopolymerization initiator.

Citation List

Patent Literature

PTL 1: Japanese Unexamined Patent Application Publication No. 2006-328227
PTL 2: Japanese Unexamined Patent Application Publication No. 2012-162615

Summary of Invention

Technical Problem

As described above, it has been proposed to increase the adhesion between a printed layer (i.e., cured coating film) and the surface of a target base printing material by blending a photopolymerizable compound including a phosphate group or a photopolymerizable phosphate compound with a photocurable ink composition for inkjet printing. However, it was found that when a photocurable ink composition for inkjet printing contains a coloring agent and a pigment dispersant for dispersing the pigment and also contains a photopolymerizable compound including a phosphate group or a photopolymerizable phosphate compound, the dispersion stability of the pigment decreases, and the storage stability decreases.

A first object to be solved by the present invention is to provide a photocurable ink composition for inkjet printing containing a pigment and a pigment dispersant, wherein the photocurable ink composition exhibits high adhesion between its printed layer and a target base printing material and has high dispersion stability of the pigment in the ink composition and improved storage stability.

A second object to be solved by the present invention is to provide a photocurable ink composition for inkjet printing containing a pigment and a pigment dispersant, wherein the photocurable ink composition exhibits high adhesion between its printed layer and a target base printing material and high water resistance of the printed layer and has high dispersion stability of the pigment in the ink composition and improved storage stability. Solution to Problem

The present invention relates to a photocurable ink composition for inkjet printing shown below.

[Item 1] A photocurable ink composition for inkjet printing containing a pigment, a pigment dispersant, a photopolymerization initiator, and a photopolymerizable compound, wherein the photopolymerizable compound contains a hydrophilic monofunctional monomer and a phosphate (meth)acrylate, the phosphate (meth)acrylate is included in an

amount of 0.1 to 4.3 mass% based on the entire ink composition, and the pigment dispersant is included in an amount of 38 to 100 parts by mass based on 100 parts by mass of the pigment.

[Item 2] The photocurable ink composition for inkjet printing according to Item 1, wherein the pigment includes carbon black, and a mass ratio of the hydrophilic monofunctional monomer to the phosphate (meth)acrylate is 5 to 400.

[Item 3] The photocurable ink composition for inkjet printing according to Item 1 or 2, wherein the photopolymerizable compound further contains an amine-modified oligomer.

[Item 4] The photocurable ink composition for inkjet printing according to any one of Items 1 to 3, wherein a mass ratio of the hydrophilic monofunctional monomer to the phosphate (meth)acrylate is 5 to 400.

[Item 5] The photocurable ink composition for inkjet printing according to any one of Items 1 to 4, wherein the amine-modified oligomer is included in an amount of 0.1 to 20 mass% based on the entire ink composition.

[Item 6] The photocurable ink composition for inkjet printing according to any one of Items 1 to 5, wherein the hydrophilic monofunctional monomer contains at least one of an N-disubstituted (meth)acrylamide and a hydroxyl group-containing monofunctional monomer.

[Item 7] The photocurable ink composition for inkjet printing according to any one of Items 1 to 6, wherein the pigment dispersant contains a basic group-containing pigment dispersant.

[Item 8] The photocurable ink composition for inkjet printing according to any one of Items 1 to 7, wherein the pigment dispersant contains a pigment dispersant having an amine value of less than 40 mg KOH/g and a pigment dispersant having an amine value of 40 mg KOH/ g or more.

[Item 9] The photocurable ink composition for inkjet printing according to any one of Items 1 to 8, wherein the photopolymerizable compound further contains a multifunctional monomer other than the phosphate (meth)acrylate.

[Item 10] The photocurable ink composition for inkjet printing according to any one of Items 1 to 9, wherein the phosphate (meth)acrylate includes a phosphate (meth)acrylate having three (meth)acrylate groups.

## Advantageous Effects of Invention

According to the photocurable ink composition for inkjet printing of the present invention, provided is an inkjet printing ink composition exhibiting high adhesion between its printed layer and a target base printing material and having high dispersion stability of the pigment in the ink composition and improved storage stability.

According to the photocurable ink composition for inkjet printing of the present invention, provided is an inkjet printing ink composition exhibiting high adhesion between its printed layer and a target base printing material and high water resistance of the printed layer and having high dispersion stability of the pigment in the ink composition and improved storage stability.

## Description of Embodiments

### [A. Composition of photocurable ink composition for inkjet printing]

The photocurable ink composition for inkjet printing of the present invention (hereinafter, also simply referred to as "ink composition") contains 1) a pigment, 2) a pigment dispersant, 3) a photopolymerizable compound, 4) a photopolymerization initiator, and 5) an optional other component: the 3) photopolymerizable compound includes a hydrophilic monofunctional monomer and a phosphate (meth)acrylate in combination, and can further contain another optional photopolymerizable compound. The ink composition of the present invention may contain carbon black as a pigment. In addition, the ink composition of the present invention may contain an amine-modified oligomer as a photopolymerizable compound.

### [A-1. Pigment]

The ink composition contains a pigment. The pigment is a component that is added to the ink composition for providing tinting strength, covering power, and so on, and examples thereof include a color pigment, a white pigment, and a metal powder. Examples of such pigments include the following organic and/or inorganic pigments that are used in known ink compositions without specific limitation.

Examples of the pigment include a dye lake pigment, azo-based, benzimidazolone-based, phthalocyanine-based, quinacridone-based, anthraquinone-based, dioxazine-based, indigo-based, thioindigo-based, perylene-based, perinone-based, diketopyrrolopyrrole-based, isoindolinone-based, nitro-based, nitroso-based, flavanthrone-based, quinophthalone-based, pyranthrone-based, indanthrone-based, and other-based organic pigments, and various inorganic pigments.

Preferred examples of these pigments include yellow pigments such as disazo yellow (Pigment Yellow 12, Pigment Yellow 13, Pigment Yellow 14, Pigment Yellow 17, and Pigment Yellow 1), Hansa Yellow, Pigment Yellow 150, and

Pigment Yellow 155; magenta pigments such as Brilliant Carmine 6B, Lake Red C, Watchung Red, quinacridone, Pigment Red 122, and Pigment Red 254; cyan pigments such as Phthalocyanine Blue, Phthalocyanine Green, Alkaline Blue, and Pigment Blue 15:4; and titanium oxide (e.g., Pigment White 6), zinc oxide, red iron oxide, Antimony Red, Cadmium Yellow, Cobalt Blue, Prussian blue, ultramarine, iron black, chromium oxide green, carbon black (e.g., Pigment Black 7), colored pigments such as graphite (including achromatic color pigments such as white and black pigments), and metal powders such as aluminum paste and bronze powder.

The content of the pigment in the ink composition varies depending on the type of pigment and the desired degree of coloring and is not particularly limited, but can be, for example, about 2.0 to 30.0 mass% based on the entire ink composition. When a colored ink composition is prepared, it is also possible to use a pigment or dye of another color as a complementary color in combination or to add an ink composition of another color thereto.

In the present invention, when the pigment contains carbon black, the content of the carbon black in the pigment is not particularly limited and can be arbitrarily set in a range of greater than 0 mass% to 100 mass% based on the entire pigment. For example, the content is 30 mass% or more, preferably 50 mass% or more, more preferably 80 mass% or more, and further preferably 100 mass%.

[A-2. Pigment dispersant]

The ink composition contains one or more pigment dispersants for dispersing the pigment. The pigment dispersant is preferably a polymeric pigment dispersant, and also preferably a basic group-containing pigment dispersant. Examples of the basic group-containing pigment dispersant include polymeric pigment dispersants, such as a basic group-containing polyester-based pigment dispersant, a basic group-containing acrylic-based pigment dispersant, a basic group-containing urethane-based pigment dispersant, and a basic group-containing carbodiimide-based pigment dispersant, and anionic surfactants.

The polymeric pigment dispersant is not particularly limited but can be a linear polymer including a pigment affinity portion composed of a basic group at at least one end (one end or both ends) of the main chain due to a block or graft structure. The polymeric pigment dispersant can include 2 to 3,000 basic groups in one molecule and can have a number-average molecular weight of 1,000 to 1,000,000.

The pigment dispersant preferably has an amine value of 10 mg KOH/g or more and more preferably 20 mg KOH/g or more; and in contrast, preferably 100 mg KOH/g or less, more preferably 80 mg KOH/g or less, and further preferably 70 mg KOH/g or less. The amine value indicates the total amount of free bases and bases and is expressed as the number of mg of potassium hydroxide equivalent to the amount of hydrochloric acid required for neutralizing 1 g of the sample.

It may be preferable that the ink composition contain two or more pigment dispersants having different amine values. That is, the dispersion stability of a pigment in an ink composition can be enhanced by combining a pigment dispersant having an amine value lower than a certain level and a pigment dispersant having an amine value higher than or equal to the certain level. Preferably, a pigment dispersant having an amine value of less than 40 mg KOH/g and a pigment dispersant having an amine value of 40 mg KOH/g or more can be combined.

Specific types of pigment dispersants, preferably basic group-containing pigment dispersants, include the following types (1) to (17).

(1) A reaction product of an amino group and/or imino group of a polyamine compound (e.g., poly(lower alkyleneamine) such as polyallylamine, polyvinylamine, and polyethylene polyimine) and at least one selected from the group consisting of polyester, polyamide, and polyesteramide having free carboxyl groups (see Japanese Unexamined Patent Application Publication No. 2001-59906);

(2) A reaction product of a low molecular weight amino compound such as poly(lower)alkyleneimine and methyliminobispropylamine and polyester having a free carboxyl group (see Japanese Unexamined Patent Application Publication Nos. 54-37082 and 1-311177);

(3) A reaction product obtained by sequentially reacting an isocyanate group of a polyisocyanate compound with an alcohol such as methoxypolyethylene glycol or a polyester having one hydroxyl group such as caprolactone polyester, a compound having 2 or 3 isocyanate group-reactive functional groups, and an aliphatic or heterocyclic hydrocarbon compound having an isocyanate group-reactive functional group and a tertiary amino group(see Japanese Unexamined Patent Application Publication No. 2-612);

(4) A compound obtained by reacting a polymer of acrylate having an alcoholic hydroxyl group with a polyisocyanate compound and a hydrocarbon compound having an amino group;

(5) A reaction product obtained by adding a polyether chain to a low molecular weight amino compound;

(6) A reaction product obtained by reacting a compound having an isocyanate group with a compound having an amino group (see Japanese Unexamined Patent Application Publication No. 4-210220);

(7) A reaction product obtained by reacting a polyepoxy compound with a linear polymer having a free carboxyl group

and an organic amine compound having one secondary amino group (see Japanese Unexamined Patent Application Publication No. 9-87537);

(8) A reaction product of a polycarbonate compound having a functional group that can react with an amino group at one end and a polyamine compound (see Japanese Unexamined Patent Application Publication No. 9-194585);

(9) A copolymer of at least one selected from methacrylates and acrylates such as methyl methacrylate, ethyl methacrylate, propyl methacrylate, butyl methacrylate, stearyl methacrylate, benzyl methacrylate, methyl acrylate, ethyl acrylate, propyl acrylate, butyl acrylate, stearyl acrylate, and benzyl acrylate, at least one basic group-containing polymerizable monomer such as acrylamide, methacrylamide, N-methylolamide, vinylimidazole, vinylpyridine, and a monomer having an amino group and a polycaprolactone skeleton, and at least one of styrene, a styrene derivative, and other polymerizable monomers (see Japanese Unexamined Patent Application Publication No. 1-164429);

(10) A basic group-containing carbodiimide-based pigment dispersant (see International Publication No. WO 2004/000950) ;

(11) A block copolymer composed of a block including a basic group such as a tertiary amino group and a quaternary ammonium base and a block not having a functional group (see Japanese Unexamined Patent Application Publication No. 2005-55814);

(12) A pigment dispersant obtained by Michael addition reaction of polyallylamine with a polycarbonate compound (see Japanese Unexamined Patent Application Publication No. 9-194585);

(13) A carbodiimide-based compound including at least one polybutadiene chain and at least one basic nitrogen-containing group (see Japanese Unexamined Patent Application Publication No. 2006-257243);

(14) A carbodiimide-based compound including at least one side chain having an amide group and at least one basic nitrogen-containing group in the molecule (see Japanese Unexamined Patent Application Publication No. 2006-176657);

(15) A polyurethane-based compound including a constituting unit including an ethylene oxide chain and a propylene oxide chain and including an amino group quaternized with a quaternizing agent (see Japanese Unexamined Patent Application Publication No. 2009-175613);

(16) A compound obtained by reacting an isocyanate group of an isocyanate compound having an isocyanurate ring in the molecule with an active hydrogen group of a compound including an active hydrogen group in the molecule and including a carbazole ring and/or an azobenzene skeleton, wherein the number of carbazole rings and azobenzene skeletons in the molecule of the compound is from 15% to 85% with respect to the sum of the number of isocyanate groups derived from the isocyanate compound having an isocyanurate ring and the number of urethane bonds and urea bonds generated by the reaction between the isocyanate group and the active hydrogen group (see Japanese Unexamined Patent Application Publication No. 2010-107965); and

(17) A graft copolymer obtained by introducing a polyether or polyester side chain into an acrylate polymer having amino groups.

The pigment dispersant is also commercially available. Examples of the pigment dispersant that is commercially available include SOLSPERSE series of The Lubrizol Corporation, Disperbyk series and BYKJET series of BYK-Chemie GmbH, EFKA series of BASF SE, and AJISPER series of Ajinomoto Fine-Techno Co., Inc.

Examples of the SOLSPERSE series include SOLSPERSE 11200, SOLSPERSE 13240, SOLSPERSE 13650, SOLSPERSE 13940, SOLSPERSE 16000, SOLSPERSE 17000, SOLSPERSE 18000, SOLSPERSE 20000, SOLSPERSE 24000, SOLSPERSE 24000SC, SOLSPERSE 24000GR, SOLSPERSE 2600, SOLSPERSE 28000, SOLSPERSE 31845, SOLSPERSE 32000, SOLSPERSE 32500, SOLSPERSE 32550, SOLSPERSE 32600, SOLSPERSE 33000, SOLSPERSE 34750, SOLSPERSE 35100, SOLSPERSE 35200, SOLSPERSE 37500, SOLSPERSE 38500, SOLSPERSE 39000, SOLSPERSE 56000, SOLSPERSE 71000, SOLSPERSE 73000, and SOLSPERSE 74000.

Examples of the Disperbyk series include Disperbyk-101, Disperbyk-108, Disperbyk-109, Disperbyk-112, Disperbyk-116, Disperbyk-130, Disperbyk-140, Disperbyk-142, Disperbyk-145, Disperbyk-161, Disperbyk-162, Disperbyk-163, Disperbyk-164, Disperbyk-166, Disperbyk-167, Disperbyk-168, Disperbyk-180, Disperbyk-182, Disperbyk-183, Disperbyk-185, Disperbyk-184, Disperbyk-2000, Disperbyk-2001, Disperbyk-2008, Disperbyk-2020, Disperbyk-2050, Disperbyk-2070, Disperbyk-2150, and Disperbyk-2155.

Examples of the BYKJET series include BYKJET-9131, BYKJET-9132, BYKJET-9133, BYKJET-9142, BYKJET-9150, BYKJET-9151, BYKJET-9152, BYKJET-9170, BYKJET-9171, BYKJET-9175, and BYKJET-9177.

Examples of the EFKA series include EFKA 4008, EFKA 4046, EFKA 4047, EFKA 4015, EFKA 4020, EFKA 4050, EFKA 4055, EFKA 4060, EFKA 4080, EFKA 4300, EFKA 4330, EFKA 4400, EFKA 4401, EFKA 4402, EFKA 4403, EFKA 4500, EFKA 4510, EFKA 4530, EFKA 4800, EFKA PX 4701, and EFKA PX 4703.

Examples of the AJISPER series include AJISPER PB-711, AJISPER PB-821, and AJISPER PB-822.

Among these products, examples of a pigment dispersant having an amine value of 40 mg KOH/g or more include SOLSPERSE 24000 (41.6 mg KOH/g), SOLSPERSE 33000 (43 mg KOH/g), SOLSPERSE 71000 (75 mg KOH/g), SOLSPERSE 73000 (80 mg KOH/g), SOLSPERSE 74000 (81 mg KOH/g), Disperbyk-108 (71 mg KOH/g), Disperbyk-180

(94 mg KOH/g), Disperbyk-2008 (66 mg KOH/g), Disperbyk-2155 (48 mg KOH/g), EFKA 4300 (57 mg KOH/g), EFKA 4401 (48 to 52 mg KOH/g), EFKA PX 4701 (40 mg KOH/g), and EFKA PX 4703 (56 mg KOH/g).

Examples of a pigment dispersant having an amine value of less than 40 mg KOH/g include SOLSPERSE 32000 (31.2 mg KOH/g), SOLSPERSE 39000 (26 mg KOH/g), SOLSPERSE 56000 (39 mg KOH/g), Disperbyk-163 (10 mg KOH/g), Disperbyk-168 (11 mg KOH/g), Disperbyk-2050 (31 mg KOH/g), BYKJET-9151 (17 mg KOH/g), BYKJET-9152 (27 mg KOH/g), AJISPER PB-821 (11.2 mg KOH/g), and AJISPER PB-822 (18.2 mg KOH/g).

When a pigment dispersant having an amine value of less than 40 mg KOH/g and a pigment dispersant having an amine value of 40 mg KOH/g or more are combined: the pigment dispersant having an amine value of less than 40 mg KOH/g preferably has an amine value of 10 mg KOH/g or more and more preferably an amine value of 20 mg KOH/g or more; and the pigment dispersant having an amine value of 40 mg KOH/g or more preferably has an amine value of 100 mg KOH/g or less, more preferably an amine value of 80 mg KOH/g or less, and further preferably an amine value of 70 mg KOH/g or less. It is sufficient that the "difference" between the amine values of the pigment dispersant having an amine value of less than 40 mg KOH/g and the pigment dispersant having an amine value of 40 mg KOH/g or more be 1 mg KOH/g or more.

The content of the pigment dispersant in the ink composition is 38 to 100 parts by mass based on 100 parts by mass of the pigment. The content of the pigment dispersant based on 100 parts by mass of the pigment is 38 parts by mass or more, preferably 40 parts by mass or more, and more preferably 50 parts by mass or more; and is 100 parts by mass or less, preferably 90 parts by mass or less, and more preferably 80 parts by mass or less. The content of the pigment dispersant based on the entire ink composition is, for example, 0.5 mass% or more and preferably 0.8 mass% or more; and, for example, 4 mass% or less and preferably 3 mass% or less. When a pigment dispersant ($\alpha$) having an amine value of less than 40 mg KOH/g and a pigment dispersant ($\beta$) having an amine value of 40 mg KOH/g or more are combined, the content mass ratio of $\alpha$ to $\beta$ is also not particularly limited, but is preferably within a range of $\alpha$:$\beta$ = 10:1 to 10:15.

[A-3. Photopolymerizable compound]

The ink composition includes a photopolymerizable compound, and here, the photopolymerizable compound includes a combination of a hydrophilic monofunctional monomer and a phosphate (meth)acrylate and may also include another optional photopolymerizable compound. As the optional photopolymerizable compound, it may be preferable to include an oligomer (in particular, an amine-modified oligomer) or a multifunctional monomer (however, excluding a phosphate (meth)acrylate). The total content of the photopolymerizable compounds is, for example, 70 mass% or more, preferably 80 mass% or more, and more preferably 85 mass% or more based on the entire ink composition.

[A-3a. Hydrophilic monofunctional monomer]

The hydrophilic monofunctional monomer is a monofunctional monomer having one ethylenic unsaturated group and including a hydrophilic group such as a hydroxyl group, an amide group, a carboxyl group (or its salt), a sulfonate group (or its salt), a phosphate group (or its salt), an ether group (such as a glycol group), or an amino group. The hydrophilic monofunctional monomer is preferably a hydroxyl group- and/or amide group-containing monofunctional monomer.

Examples of the hydroxyl group-containing monofunctional monomer include: hydroxyalkyl (meth)acrylates, such as 2-hydroxyethyl (meth)acrylate, 2-hydroxypropyl (meth)acrylate, 3-hydroxypropyl (meth)acrylate, 3-hydroxybutyl (meth)acrylate, 4-hydroxybutyl (meth)acrylate, and cyclohexanedimethanol mono(meth)acrylate; and 2-hydroxyethyl vinyl ether (HEVE), 4-hydroxybutyl vinyl ether (HBVE), and 4-hydroxybutyl acrylate glycidyl ether (HBAGA).

The amide group-containing monofunctional monomer is preferably a (meth)acrylamide and further preferably a (meth)acrylamide (N-disubstituted (meth)acrylamide) in which two hydrogens on the nitrogen of an amide group ($-C(=O)NH_2$) are substituted with other substituents, and is particularly preferably an N-disubstituted acrylamide. Examples of the N-disubstituted (meth)acrylamide include:
(meth)acryloylmorpholine, N,N-dimethyl(meth)acrylamide, diethyl(meth)acrylamide; and N-alkylol(C1-5) (meth)acrylamides such as di(2-hydroxyethyl) (meth)acrylamide, di(3-hydroxypropyl) (meth)acrylamide, and di(4-hydroxybutyl) (meth)acrylamide, and 1 to 3 mole ethylene oxide or propylene oxide adducts of these N-alkylol(C1-5) (meth)acrylamides.

The amide group-containing monofunctional monomer may be 1) a (meth)acrylamide, 2) N-methyl(meth)acrylamide, N-methoxymethyl(meth)acrylamide, N-butoxymethyl(meth)acrylamide, or the like in which one hydrogen on the nitrogen of an amide group ($-C(=O)NH_2$) is substituted with another substituent; or 3) N-vinylpyrrolidone (NVP), N-vinylformamide, or the like.

These hydrophilic monofunctional monomers may be used alone or in combination of two or more. In particular, it is preferable to include an amide group-containing monofunctional monomer (in particular, an N-disubstituted (meth)acrylamide) and a monofunctional monomer including a hydroxyl group in combination.

The content of the hydrophilic monofunctional monomer in the ink composition is preferably set such that the dispersion stability of the pigment can be maintained. As described later, although the phosphate (meth)acrylate is a

component that may have a function of decreasing the pigment dispersion stability, the hydrophilic monofunctional monomer in the ink composition of the present invention can have a function of preventing a decrease in the dispersion stability of the pigment due to the phosphate (meth)acrylate. Accordingly, it is preferable to appropriately set the content of the hydrophilic monofunctional monomer relative to the phosphate (meth)acrylate. The content ratio of the hydrophilic monofunctional monomer and the phosphate (meth)acrylate can be as described in the section [A-3b.] later.

The content of the hydrophilic monofunctional monomer in the ink composition based on the entire ink composition can be in a range of, for example, 10 mass% or more, preferably 12 mass% or more, and more preferably 15 mass% or more and of, for example, 80 mass% or less, preferably 75 mass% or less, and more preferably 65 mass% or less. The physical properties (such as viscosity and surface tension) of the ink composition can be easily adjusted within appropriate ranges by adjusting the content of the hydrophilic monofunctional monomer within such a range. In addition, the content of the hydrophilic monofunctional monomer based on the entire photopolymerizable compound can be adjusted within a range of, for example, 15 mass% or more and preferably 20 mass% or more and of, for example, 85 mass% or less and preferably 80 mass% or less.

[A-3b. Phosphate (meth)acrylate]

The ink composition contains one or more phosphate (meth)acrylates as the photopolymerizable compound. The phosphate (meth)acrylate is a compound having both a phosphate group and a (meth)acryloyl group in the molecule. That is, the phosphate (meth)acrylate is a compound in which "a functional group containing a (meth)acryloyl group" is introduced to one, two, or three of the three OH-groups of phosphoric acid ($P(=O)(OH)_3$), and can be represented by the formulae (1X) to (3X) below. The "(meth)acryloyl group" means a methacryloyl group or an acryloyl group.

[Chem. 1]

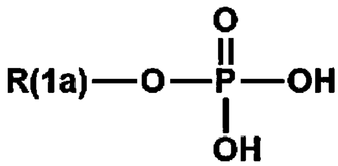

(1X)

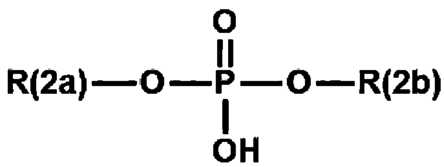

(2X)

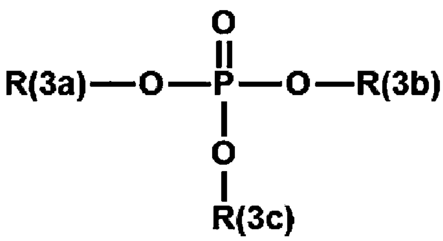

(3X)

The substituents R(1a), R(2a), R(2b), R(3a), R(3b), and R(3c) in the formulae (1X) to (3X) each independently represent a "functional group containing a (meth)acryloyl group" and may be the same as or different from one another. Examples of the "functional group containing a (meth)acryloyl group" include groups represented by the following formulae (G1) to (G3). In the formulae (G1) to (G3), $R^{10}$ represents a hydrogen atom or a methyl group, $A^1$ to $A^4$ each independently represent an alkylene group having 1 to 20 carbon atoms, and n1 to n3 each independently represent an integer of 1 to 100.

[Chem. 2]

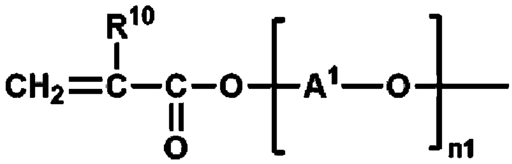

(G1)

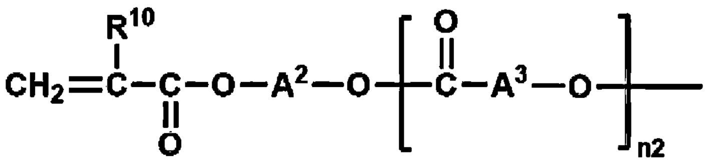

(G2)

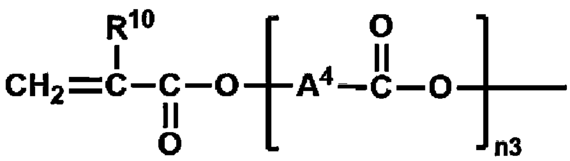

(G3)

In a preferable example of the "functional group containing a (meth)acryloyl group" in the phosphate (meth)acrylate, in the formula (G1), $R^{10}$ is a hydrogen atom or a methyl group, and $A^1$ is a phosphate (meth)acrylate of an alkylene group having 2 to 6 carbon atoms, in the formula (G2), $R^{10}$ is a hydrogen atom or a methyl group, $A^2$ is an alkylene group having 2 to 6 carbon atoms, and $A^3$ is a phosphate (meth)acrylate of an alkylene group having 6 to 12 carbon atoms, and in the formula (G3), $R^{10}$ is a hydrogen atom or a methyl group, and $A^4$ is a phosphate (meth)acrylate of an alkylene group having 2 to 12 carbon atoms.

Further specific examples of the phosphate (meth)acrylate include the following.

[Chem. 3]

(1A) 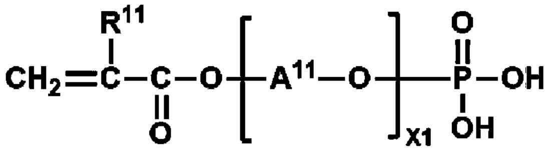

(1B) 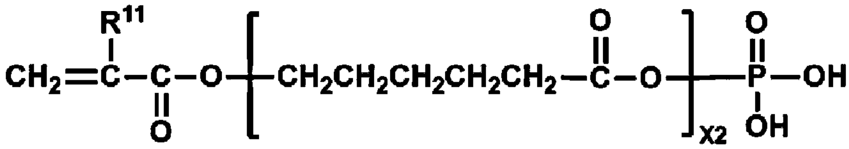

(1C) 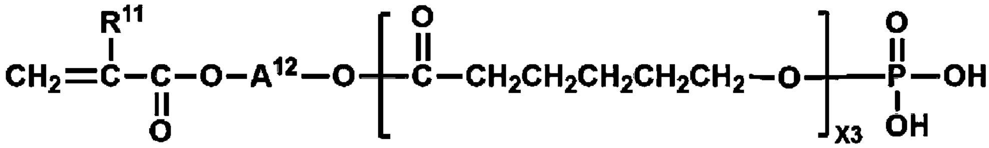

(1D) 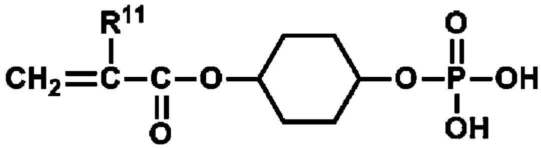

(1E) 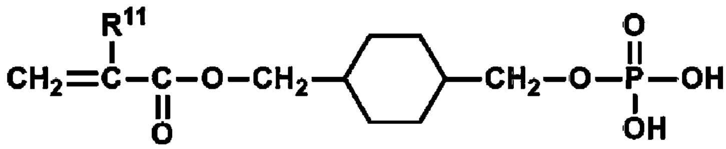

(1F) 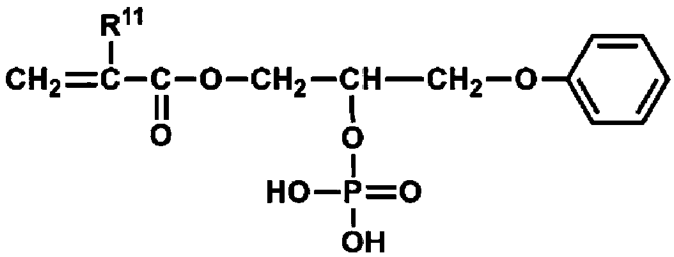

(In the formulae (1A) to (1F), $R^{11}$ is a hydrogen atom or a methyl group, $A^{11}$ and $A^{12}$ are each independently an alkylene group having 1 to 20 carbon atoms, and X1 to X3 are each independently an integer of 1 to 100.)

In the present invention, the compound represented by the formula (1A) is preferably a phosphate (meth)acrylate in which $R^{11}$ is a hydrogen atom or a methyl group, $A^{11}$ is an alkylene group having 2 to 6 carbon atoms, and X1 is an integer of 1 to 10.

In the present invention, the compound represented by the formula (1B) is preferably a phosphate (meth)acrylate in which $R^{11}$ is a hydrogen atom or a methyl group, and X2 is an integer of 1 to 10.

In the present invention, the compound represented by the formula (1C) is preferably a phosphate (meth)acrylate in which $R^{11}$ is a hydrogen atom or a methyl group, $A^{12}$ is an alkylene group having 2 to 6 carbon atoms, and X3 is an integer of 1 to 10.

[Chem. 4]

(2A)

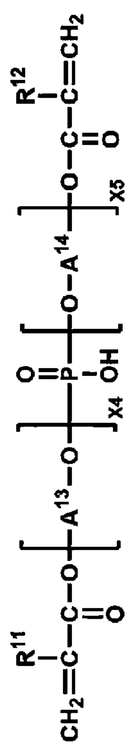

(2B)

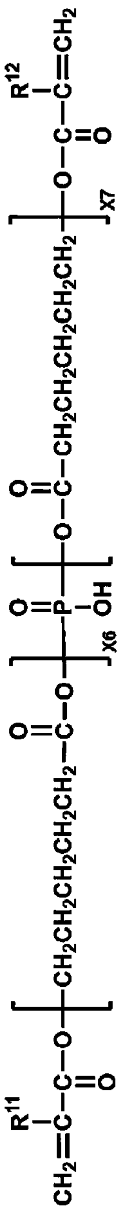

(2C)

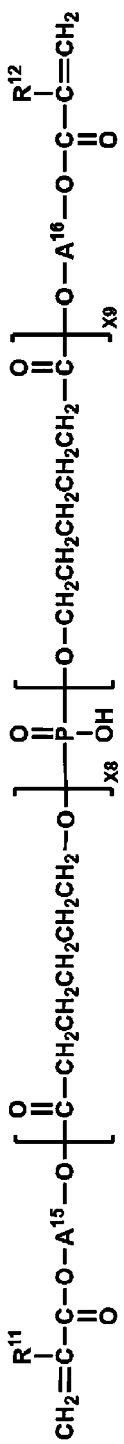

(2D)

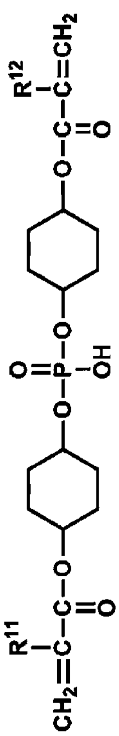

(2E)

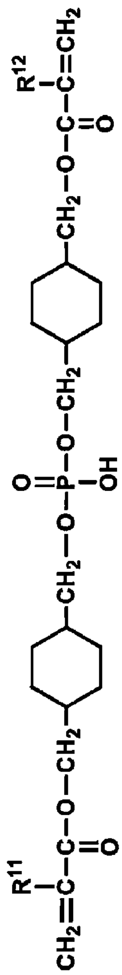

(2F)

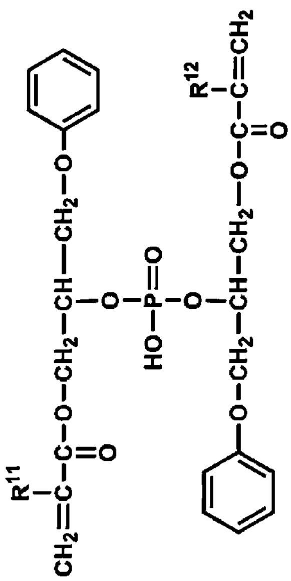

(In the formulae (2A) to (2F), $R^{11}$ and $R^{12}$ are each independently a hydrogen atom or a methyl group, $A^{13}$ to $A^{16}$ are each independently an alkylene group having 1 to 20 carbon atoms, and X4 to X9 are each independently an integer of 1 to 100.)

In the present invention, the compound represented by the formula (2A) is preferably a phosphate (meth)acrylate in which $R^{11}$ is a hydrogen atom or a methyl group, $R^{12}$ is a hydrogen atom or a methyl group, $A^{13}$ is an alkylene group having 2 to 6 carbon atoms, $A^{14}$ is an alkylene group having 2 to 6 carbon atoms, X4 is an integer of 1 to 10, and X5 is an integer of 1 to 10.

In the present invention, the compound represented by the formula (2B) is preferably a phosphate (meth)acrylate in which $R^{11}$ is a hydrogen atom or a methyl group, $R^{12}$ is a hydrogen atom or a methyl group, X6 is an integer of 1 to 10, and X7 is an integer of 1 to 10.

In the present invention, the compound represented by the formula (2C) is preferably a phosphate (meth)acrylate in which $R^{11}$ is a hydrogen atom or a methyl group, $R^{12}$ is a hydrogen atom or a methyl group, $A^{15}$ is an alkylene group having 2 to 6 carbon atoms, $A^{16}$ is an alkylene group having 2 to 6 carbon atoms, X8 is an integer of 1 to 10, and X9 is an integer of 1 to 10.

[Chem. 5]

(3A) 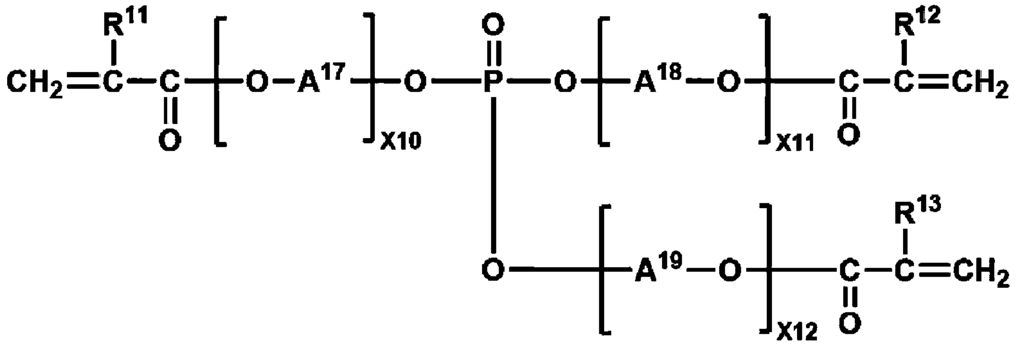

(In the formula (3A), $R^{11}$ to $R^{13}$ are each independently a hydrogen atom or a methyl group, $A^{17}$ to $A^{19}$ are each independently an alkylene group having 1 to 20 carbon atoms, and X10 to X12 are each independently an integer of 1 to 100.)

In the phosphate (meth)acrylate, although at least one of the three -OH groups of phosphoric acid ($P(=O)(OH)_3$) may remain as it is, the "functional group containing a (meth)acryloyl group" may be introduced into all of the three -OH groups (there are no remaining -OH groups of phosphoric acid). The phosphate (meth)acrylate in which the "functional group containing a (meth)acryloyl group" is introduced into all of the three -OH groups has a low viscosity and therefore has the advantage of being capable of easily adjusting the physical properties of the ink composition, and also the adhesion of the cured coating film of the ink composition to a base material can be sufficiently increased by combining the functional group containing a (meth)acryloyl group with a hydrophilic monofunctional monomer.

The content of the phosphate (meth)acrylate in the ink composition is 0.1 mass% or more based on the entire ink composition and preferably 0.2 mass% or more and more preferably 0.5 mass% or more; and is 4.3 mass% or less, preferably 4 mass% or less, and more preferably 3 mass% or less. The adhesion of the cured coating film of the ink composition to a base material can be increased by controlling the content of the phosphate (meth)acrylate in the ink composition to a certain level or more. In contrast, the storage stability of the ink composition, i.e., the dispersion stability of the pigment, can be enhanced by controlling the content of the phosphate (meth)acrylate to a certain level or less.

The phosphate (meth)acrylate can have a function of decreasing the dispersion stability of a pigment, more specifically, a function of decreasing the function of a pigment dispersant. Accordingly, it may be difficult to maintain the pigment dispersion stability of an ink composition containing the phosphate (meth)acrylate. In contrast, the ink composition of the present invention contains a certain amount or more of a hydrophilic monofunctional monomer and therefore has high pigment dispersion stability even if the phosphate (meth)acrylate is blended therein.

Accordingly, the content ratio of the phosphate (meth)acrylate and the hydrophilic monofunctional monomer is preferably set such that the pigment dispersion stability of the ink composition can be maintained. Specifically, the mass ratio of the hydrophilic monofunctional monomer relative to the phosphate (meth)acrylate is 5 or more, preferably 7 or more, and more preferably 8 or more; and 400 or less, preferably 300 or less, more preferably 200 or less, and further preferably 100 or less. In the present invention, when the water resistance of the cured coating film of the ink composition is not an issue, the mass ratio of the hydrophilic monofunctional monomer to the phosphate (meth)acrylate can be 5 to 400, and when the cured coating film of the ink composition needs water resistance, the mass ratio of the hydrophilic monofunctional monomer to the phosphate (meth)acrylate is preferably 5 to 300.

The mechanism of maintaining the pigment dispersion stability by blending the hydrophilic monofunctional monomer is not particularly limited. A possible mechanism is as follows: since the phosphate (meth)acrylate is a component having a relatively high polarity, the phosphate (meth)acrylate localizes near the pigment dispersant (the dispersant therearound), which similarly has a high polarity, and the dispersion of the pigment is destroyed by interactions with each other, which can result in a decrease in the stability of the ink composition; however, it can be thought that the localization of the phosphate (meth)acrylate is reduced by the addition of the hydrophilic monofunctional monomer to relieve the interaction between the phosphate (meth)acrylate and the pigment dispersant, and the decrease in the dispersion of the pigment is suppressed.

[A-3c. Oligomer (amine-modified oligomer)]

The ink composition may contain one or more oligomers as photopolymerizable compounds. The oligomer is a component that is to have a higher molecular weight after polymerization of the ethylenic unsaturated bonds in the molecule. The oligomer is a component with a relatively high molecular weight before polymerization and therefore can impart moderate viscosity and elasticity to the ink composition. In addition, the oligomer has a relatively high polarity and may impart adhesion and adhesiveness with a non-absorptive medium to a cured ink composition. Among the oligomers, since the amine-modified oligomer can increase the photocuring properties of the ink composition, it may be preferable that the ink composition of the present invention include an amine-modified oligomer.
The amine-modified oligomer is an oligomer including one or more amino groups and one or more photopolymerizable functional groups in the molecule and is preferably an oligomer including two or more photopolymerizable functional groups (multifunctional amine-modified oligomer). Here, the photopolymerizable functional group is preferably a (meth)acryloyl group; and a preferable amine-modified oligomer is an amine-modified (meth)acrylate oligomer including one or more amino groups and two or more (meth)acryloyl groups in the molecule.
The amine-modified (meth)acrylate oligomer may be synthesized by polymerizing a desired monomer or may be a commercially available product. Examples of the commercially available product include GENOMER 5161 and GENOMER 5275 (RAHN AG); CN 371, CN 371NS, CN 373, CN 383, CN 384, CN 386, CN 501, CN 503, CN 550, and CN 551 (Sartomer LLC); EBECRYL 80, EBECRYL 81, EBECRYL 83, EBECRYL 7100, EBECRYL 84, and EBECRYL P115 (Daicel-Allnex Ltd.); LAROMER PO 83F, LAROMER PO 84F, Laromer LR8946, Laromer LR8956, Laromer LR8996, and Laromer LR8894 (BASF SF); AgiSyn 001, AgiSyn 002, Agisyn 003, and Agisyn 008 (DSM Coating Resin Ltd.); Photomer 4771, Photomer 4775, Photomer 4967, Photomer 5006, Photomer 5096, Photomer 5662, and Photomer 5930 (Cognis Corporation); and Doublecure EPD, Doublecure OPD, Doublecure 115, Doublecure 225, Doublecure 645, PolyQ 222, PolyQ 226, PolyQ 224, and PolyQ 101 (Double Bond Chemical Ind., Co., Ltd.).
The viscosity of the amine-modified oligomer is not limited, but, in particular, a viscosity at 25°C of 2,000 mPa·s or less is preferable for adjusting the viscosity of the entire photocurable ink composition for inkjet printing within an appropriate range.
The content of the amine-modified oligomer included in the photocurable ink composition for inkjet printing is not particularly limited. The content based on the entire ink composition is, for example, 0.1 mass% or more and preferably 0.3 mass% or more; and is also, for example, 20 mass% or less, preferably 18 mass% or less, and more preferably 15 mass% or less.

[A-3d. Multifunctional monomer (phosphate (excluding meth)acrylate and oligomer)]

The ink composition may contain one or more multifunctional monomers that are photopolymerizable compounds. As the multifunctional monomer (monomer including 2 or more ethylenic unsaturated bonds), for example, the following multifunctional (meth)acrylate-based compounds and vinyl ether group-containing (meth)acrylate-based compounds can be used.
The multifunctional (meth)acrylate-based compound may be a difunctional di(meth)acrylate-based compound, a trifunctional tri(meth)acrylate-based compound, or a higher multifunctional (meth)acrylate-based compound.
Examples of the di(meth)acrylate-based compound include di(meth)acrylates of polyhydric alcohols such as glycerin, pentaerythritol, diglycerin, ditrimethylolpropane, and dipentaerythritol, e.g., ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, tricyclodecanedimethylol di(meth)acrylate, tricyclodecanedimethylol dicaprolactonate di(meth)acrylate, cyclohexanedimethanol di(meth)acrylate, dicyclopentanyl di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate,

hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, and bisphenol F tetraethylene oxide adduct dicaprolactonate di(meth)acrylate.

Examples of the tri(meth)acrylate-based compound include glycerin tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; and their 3EO (ethylene oxide)-modified products, 6EO-modified products, and 9EO-modified products (such as 3EO-modified trimethylolpropane tri(meth)acrylate, 3EO-modified trimethylolethane tri(meth)acrylate, and 3EO-modified trimethylolhexane tri(meth)acrylate).

Examples of the tetra- or higher functional (meth)acrylate-based compound include tetra- and higher functional monomers, such as trimethylolpropane tetra(meth)acrylate, pentaerythritol tetra(meth)acrylate, pentaerythritol tetracaprolactonate tetra(meth)acrylate, diglycerin tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and tripentaerythritol polyalkylene oxide hepta(meth)acrylate.

Examples of the vinyl ether group-containing (meth)acrylate-based compound include 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 3-methyl-3-vinyloxypropyl (meth)acrylate, 1,1-dimethyl-2-vinyloxyethyl (meth)acrylate, 3-vinyloxybutyl (meth)acrylate, 1-methyl-2-vinyloxypropyl (meth)acrylate, 2-vinyloxybutyl (meth)acrylate, 4-vinyloxycyclohexyl (meth)acrylate, 5-vinyloxypentyl (meth)acrylate, 6-vinyloxyhexyl (meth)acrylate, 4-vinyloxymethylcyclohexylmethyl (meth)acrylate, 3-vinyloxymethylcyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(vinyloxyethoxy)ethyl (meth)acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropyl)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2-(vinyloxyisopropoxyethoxy)ethyl (meth)acrylate, and 2-(vinyloxyisopropoxyisopropoxy)ethyl (meth)acrylate.

The content of the multifunctional monomer in the photocurable ink composition for inkjet printing to the entire ink composition is preferably 10 mass% or more and more preferably 20 mass% or more; and is preferably 70 mass% or less and more preferably 60 mass% or less. The content of the multifunctional monomer in the photocurable ink composition for inkjet printing to the entire photopolymerizable compound is preferably 15 mass% or more and more preferably 25 mass% or more; and is preferably 80 mass% or less and more preferably 70 mass% or less.

[A-4. Photopolymerization initiator]

The ink composition of the present invention contains a photopolymerization initiator. Examples of the photopolymerization initiator include a benzoin ether-based photopolymerization initiator, an acetophenone-based photopolymerization initiator, an $\alpha$-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, a triazine-based photopolymerization initiator, and an acylphosphine oxide-based photopolymerization initiator. Among these initiators, from the viewpoint of good photocuring properties, a triazine-based photopolymerization initiator and an acylphosphine oxide-based photopolymerization initiator are preferable. These photopolymerization initiators can be used alone or in combination of two or more, for example, two acylphosphine oxide-based photopolymerization initiators may be combined.

Specific examples of the photopolymerization initiator include bis(2,4,6-trimethylbenzoyl)phenylphosphine oxide, diphenyl(2,4,6-trimethylbenzoyl)phosphine oxide, ethoxy(2,4,6-trimethylbenzoyl)phenylphosphine oxide, benzophenone, diethylthioxanthone, 2-methyl-1-(4-methylthio)phenyl-2-morpholinopropan-1-one, 4-benzoyl-4'-methyldiphenyl sulfide, 1-chloro-4-propoxythioxanthone, isopropylthioxanthone, 2-hydroxy-2-methyl-1-phenylpropan-1-one, 1-hydroxycyclohexylphenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propan-1-one, 2,2-dimethyl-2-hydroxyacetophenone, 2,2-dimethoxy-2-phenylacetophenone, 2,4,6-trimethylbenzyl-diphenylphosphine oxide, and 2-benzyl-2-dimethylamino-1-(morpholinophenyl)-butan-1-one.

It is sufficient that the content of the photopolymerization initiator in the ink composition be set depending on the desired curing speed of the photocurable resin composition but is, as a guideline based on the entire ink composition, preferably 1 mass% or more and more preferably 3 mass% or more; and preferably 10 mass% or less and more preferably

8 mass% or less.

[A-5. Optional other component]

The ink composition of the present invention may contain one or more optional components, and examples of the optional component include a sensitizer, a polymerization inhibitor, a leveling agent, a surface tension adjuster, a non-reactive resin, a UV absorber, and an antioxidant.

[A-5a. Sensitizer]

The ink composition may contain a sensitizer from the viewpoint of improving the photocuring properties. Sensitizers may be used alone or in combination of two or more.

Examples of the sensitizer include anthracene-based sensitizers such as 9,10-dibutoxyanthracene, 9,10-diethoxyanthracene, 9,10-dipropoxyanthracene, and 9,10-bis(2-ethylhexyloxy)anthracene; and thioxanthone-based sensitizers such as 2,4-diethylthioxanthone, 2,4-diethylthioxanthen-9-one, 2-isopropylthioxanthone, and 4-isopropylthioxanthone. Examples of a commercially available product of the sensitizer include the product names "DBA" and "DEA" (Kawasaki Kasei Chemicals Ltd.) as the anthracene-based sensitizers and the product names "DETX" and "ITX" (Lambson Ltd.) as the thioxanthone-based sensitizers.

When the ink composition contains a sensitizer, from the viewpoint of preventing excessive addition, the content of the sensitizer is preferably 5 parts by mass or less and more preferably 4 parts by mass or less when the total amount of photopolymerizable compounds (including the phosphate (meth)acrylate, the hydrophilic monofunctional monomer, the amine-modified oligomer, and other polymerizable compounds) is 100 parts by mass. The total content of the photopolymerization initiator and the sensitizer is preferably 2 to 15 parts by mass when the total amount of the photopolymerizable compounds is 100 parts by mass.

[A-5b. Polymerization inhibitor]

The ink composition may contain a polymerization inhibitor. The polymerization inhibitor can prevent occurrence of polymerization during storage of the ink composition, and can suppress an increase in viscosity of the ink composition.

Examples of the polymerization inhibitor include phenolic compounds (including quinone-based compounds), such as butylhydroxytoluene, and tocopherol acetate, a nitrosamine-based compound, benzotriazole, and a hindered amine; in particular, a quinone-based compound and a nitrosamine-based compound are more preferable examples.

The content of the polymerization inhibitor in the photocurable ink composition for inkjet printing is appropriately set depending on the type of polymerization inhibitor, but in the case of a quinone-based compound, the content is about 0.1 to 1.0 parts by mass when the total amount of the photopolymerizable components is 100 parts by mass.

[A-5c. Surfactant (leveling agent)]

The ink composition can contain a surfactant as a leveling agent depending on the form of the printer head of an inkjet printer that is used for printing. The ink composition can contain known surfactants without particular limitation, and examples of the surfactant include a nonionic surfactant, a cationic surfactant, an anionic surfactant, and a betaine surfactant. Specific examples of the surfactant include silicone-based surfactants, such as polyether-modified silicone oil, polyester-modified polydimethylsiloxane, and polyester-modified methylalkyl polysiloxane, fluorine-based surfactants, and acetylene-based surfactants. These surfactants can be used alone or in combination of two or more.

Examples of the silicone-based surfactant include BYK-307, BYK-315N, BYK-331, BYK-333, BYK-347, BYK-348, BYK-349, BYK-345, BYK-377, BYK-378, BYK-3455, and BYK-UV3500 (BYK-Chemie GmbH).

Examples of the fluorine-based surfactant include F-410, F-444, and F-553 (DIC Corporation) and FS-65, FS-34, FS-35, FS-31, and FS-30 (DuPont de Nemours, Inc.).

Examples of the acetylene-based surfactant include Dynol 607, Dynol 609, Olfine E1004, Olfine E1010, Olfine E1020, Olfine PD-001, Olfine PD-002W, Olfine PD-004, Olfine PD-005, Olfine EXP.4001, Olfine EXP.4200, Olfine EXP.4123, and Olfine EXP.4300 (Nissin Chemical Industry Co., Ltd.), and Surfynol 104E, Surfynol 104H, Surfynol 104A, Surfynol 104BC, Surfynol 104DPM, Surfynol 104PA, Surfynol 104PG-50, Surfynol 420, Surfynol 440, and Surfynol 465 (Evonik Industries AG).

The content of the surfactant in the ink composition based on the entire ink composition is preferably 0.005 mass% or more and more preferably 0.01 mass% or more from the viewpoint of decreasing the surface tension of the ink composition and increasing the stability of ejection from an inkjet head and is preferably 1.5 mass% or less and more preferably 1 mass% or less from the viewpoint of suppressing bubbles generated in the ink composition during mixing and increasing the ejection stability.

When a surfactant is contained as a leveling agent, the content of the surfactant is preferably adjusted such that the ink composition has a surface tension at 25°C of 20 to 36 mN/m, and is more preferably 0.1 to 1.5 mass% in the photocurable ink composition for inkjet printing.

[B. Physical properties and application of ink composition]

It is sufficient that the photocurable ink composition for inkjet printing of the present invention be printable by an inkjet apparatus and have sufficient photocuring properties and adhesion to a target base printing material.

[B-1. Viscosity]

The viscosity at 25°C of the ink composition is preferably 5 mPa·s or more, more preferably 10 mPa·s or more, and further preferably 15 mPa·s or more; and is preferably 100 mPa·s or less, more preferably 60 mPa·s or less, further preferably 46 mPa·s or less, and further more preferably 25 mPa·s or less. The viscosity of the ink composition can be adjusted mainly by the composition of the photopolymerizable compound and the photopolymerization initiator and may be adjusted by blending a viscosity adjuster or the like as needed. The viscosity described in the present specification is a viscosity measured using an E-type viscometer (RE100L-type viscometer, manufactured by Toki Sangyo Co., Ltd.) under conditions of 25°C and 10 rpm. When the viscosity is less than 5 mPa·s or greater than 100 mPa·s, the ejection stability of the inkjet printing may decrease.

[B-2. Surface tension]

The surface tension at 25°C of the ink composition is preferably 20 to 36 mN/m. The surface tension of the ink composition can be adjusted by blending a surfactant (leveling agent) as needed. The surface tension can be measured using a dynamic wettability tester (for example, product name: WET-6000, manufactured by Rhesca Co., Ltd.) at a temperature of 25°C.

[B-3. Printing method]

The ink composition of the present invention can be used in printing by an inkjet printer. The system of the inkjet printer that can be used is not particularly limited, and may be a line head system (single pulse system) or may be a serial head system (multipath system). Alternatively, the inkjet printer may be a continuous-type inkjet printer, and in such a case, the electric conductivity of the ink composition can be adjusted by further adding a conductivity-imparting agent.

The ink composition is supplied to the printer head of an inkjet printer and is ejected from this printer head to a target base printing material that is a printing subject. It is sufficient that the ink composition be ejected (printing of an image) from a printer head to a base material such that the coating film has a thickness of, for example, 1 to 60 μm.

The ink composition deposited on a base material is exposed to UV light, an electron beam, or visible light emitted from a light-emitting diode (LED) or various lamps or electrodes and thereby cures. From an environmental perspective, it is preferable to use a light-emitting diode (LED) that emits UV light with a peak emission wavelength in a range of 350 to 420 nm as a light source.

[B-4. Target base printing material]

The target base printing material as the printing subject is also not particularly limited, and there is no particular limitation on the base material as long as it is a base material to which conventionally known photocurable ink compositions for inkjet printing can be applied. Examples of the base material include plastic, paper, a capsule, a gel, metal foil, glass, wood, and cloth. The photocurable ink composition for inkjet printing of the present invention can exhibit the effect of preventing migration of the photopolymerization initiator regardless of the material of the base material as the printing subject. The plastic constituting the base material is, for example, one or more selected from the group consisting of polyester-based polymers (e.g., polyethylene terephthalate (PET) and polyethylene naphthalate), cellulose-based polymers (e.g., diacetyl cellulose and triacetyl cellulose (TAC)), polycarbonate-based polymers, polyacrylic-based polymers (e.g., polymethyl methacrylate), vinyl chloride-based polymers, polyolefin-based polymers (e.g., polyethylene, polypropylene, a polyolefin polymer with a cyclic or norbornene structure, and an ethylene-propylene copolymer), polyamide-based polymers (e.g., Nylon and an aromatic polyamide polymer), polystyrene-based polymers (e.g., polystyrene and an acrylonitrile-styrene copolymer), polyimide-based polymers, polysulfone-based polymers, polyether sulfone-based polymers, polyether ketone-based polymers, polyphenyl sulfide-based polymers, polyvinyl alcohol-based polymers, polyvinylidene chloride-based polymers, polyvinyl butyral-based polymers, polyarylate-based polymers, polyoxymethylene-based polymers, and polyepoxy-based polymers, and mixtures of these polymers.

EXAMPLES

The present invention will be described in more detail with reference to Examples below, but the description of Examples should not be construed as limiting the scope of the present invention. The values (percentages) for the composition formulations of the components in Tables 1 to 3 are in mass%.

The materials used for preparing ink compositions are shown below.

<Pigment>

Pigment Yellow 155: yellow pigment
Pigment Red 122: red pigment
Pigment Red 254: red pigment
Pigment Blue 15:4: blue pigment
Pigment Black 7: black pigment (carbon black)

<Pigment dispersant>

Solsperse 56000: amine value: 39 mg KOH/g (The Lubrizol Corporation)
SOLSPERSE 39000: amine value: 26 mg KOH/g (The Lubrizol Corporation)
EFKA PX 4701: amine value: 40 mg KOH/g (BASF SE)
EFKA PX 4703: amine value: 56 mg KOH/g (BASF SE)

<Phosphate (meth)acrylate>

SR9050: 2-(methacryloyloxy)ethyl phosphate, monofunctional methacrylate (Sartomer LLC)
SR9051: tris[2-(methacryloyloxy)ethyl] phosphate, trifunctional methacrylate (Sartomer LLC)
SR9053: tris[2-(acryloyloxy)ethyl] phosphate, trifunctional acrylate (Sartomer LLC)

<Hydrophilic monofunctional monomer>

N,N-Dimethylacrylamide
Acryloylmorpholine
4-Hydroxybutyl acrylate

<Amine-modified oligomer>

CN371: amine-modified acrylate oligomer, amine value: 136 mg KOH/g, number of functional groups: 2 (Sartomer LLC)
Photomer 5006: amine-modified (meth)acrylate oligomer, amine value: 200 mg KOH/g, number of functional groups: 1 (IGM Resins B.V.)
EBECRYL 80: amine-modified (meth)acrylate oligomer, number of functional groups: 4 (Daicel-Allnex Ltd.)

<Other multifunctional monomer>

Pentaerythritol triacrylate
1,6-Hexanediol diacrylate

Dipropylene glycol diacrylate

<Photopolymerization initiator>

TPO: diphenyl(2,4,6-trimethylbenzoyl)phosphine oxide
TPO-L: ethoxy(2,4,6-trimethylbenzoyl)phenylphosphine oxide Omnirad 819: bis(2,4,6-trimethylbenzoyl)phenylphosphine oxide

<Sensitizer>

DETX: 2,4-diethylthioxanthone

<Polymerization inhibitor>

UV-22: quinone-based polymerization inhibitor (BASF SE)

<Leveling agent>

BYK-UV 3500: silicone-based surface conditioner (BYK-Chemie GmbH)

According to the composition formulations in Tables 1 to 3, the ink composition of each of Examples and Comparative Examples was produced. Specifically, a pigment, a pigment dispersant, and part of a hydrophilic monofunctional monomer were mixed and stirred to obtain a pigment dispersion product. To the obtained pigment dispersion product, the remainder of the hydrophilic monofunctional monomer, a phosphate (meth)acrylate, an amine-modified oligomer, another multifunctional monomer, a photopolymerization initiator, a sensitizer, a polymerization inhibitor, and a leveling agent were added, followed by stirring and mixing to obtain an ink composition.
The ink composition obtained in each of Examples and Comparative Examples was evaluated for the following items, and the evaluation results are shown in Tables 1 to 3.

<Storage stability>

Each ink composition obtained in each of Examples and Comparative Examples was sealed in two glass bottles, and the bottles were left to stand in environments of 25°C or 60°C, respectively, for 3 weeks, and the viscosity was then measured using an E-type viscometer (25°C, 10 rpm). The thickening rate (%) was calculated by the following calculation expression and was evaluated according to the following evaluation criteria. In the present invention, A and B are pass marks, and C is a fail mark.

Thickening rate = [{ (viscosity level after leaving to stand at 60°C for 3 weeks)/(viscosity level after leaving to stand at 25°C for 3 weeks)} × 100] - 100

(Evaluation criteria)

A: the thickening rate was less than 10%;
B: the thickening rate was 10% or more and less than 20%; and
C: the thickening rate was 20% or more.

<Adhesion>

Each ink composition obtained in each of Examples and Comparative Examples was applied to the surfaces of PVC (vinyl chloride sheet, product name: PVC80, manufactured by LINTEC Corporation) and coated paper (product name: OK Top Coat, manufactured by Oji Paper Co., Ltd.) with a commercially available inkjet printer and was irradiated with UV light to obtain cured coating films. The obtained coating films were cross-cut with a cutter knife, cellophane tape (product name: Cellotape (registered trademark), manufactured by Nichiban Co., Ltd.) was attached to the cut portions, and the tape was peeled off. The degree of peeling of the cured coating films was observed, and the adhesion was

evaluated according to the evaluation criteria below. In the present invention, A and B are pass marks, and C is a fail mark.

(Evaluation criteria)

A: the peeling rate of the cured coating film was 0%;
B: the peeling rate of the cured coating film was greater than 0% and less than 20%; and
C: the peeling rate of the cured coating film was 20% or more.

<Water resistance>

Each ink composition obtained in each of Examples and Comparative Examples was applied to PVC (vinyl chloride sheet, product name: PVC80, manufactured by LINTEC Corporation) with a commercially available inkjet printer and was irradiated with UV light to obtain cured coating films. The obtained coating films were rubbed with water-soaked bleached cloth at a load of 200 g 10 times using a Gakushin-type rubbing fastness tester (manufactured by Daiei Kagaku Seiki Mfg. Co., Ltd.). The degree of removal of the coating films was visually observed, and the water resistance was evaluated according to the following evaluation criteria.

(Evaluation criteria)

A: there were no removal of and scratches on the coating film;
B: there was no removal of the coating film, but there were scratches on the surface; and
C: obvious removal of the coating film was observed.

[Table 1]

| | | Example | | | | | | | |
|---|---|---|---|---|---|---|---|---|---|
| | | 1 | 2 | 3 | 4 | 5 | 6 | 7 | 8 |
| Pigment | Pigment Yellow 155 | | | | | | | | |
| | Pigment Red 122 | | | | | | | | |
| | Pigment Red 254 | | | | | | | | |
| | Pigment Blue 15:4 | 2.6% | 2.6% | 2.6% | 2.6% | 2.6% | 2.6% | 2.6% | 2.6% |
| | Pigment Black 7 | | | | | | | | |
| Pigment dispersant | Solsperse 56000 | 1.0% | 1.0% | 1.0% | 1.0% | 1.0% | 1.0% | 1.0% | 1.0% |
| | Solsperse 39000 | | | | | | | | |
| | EFKA PX 4701 | 0.4% | 0.4% | 1.2% | 0.4% | 0.4% | 0.4% | 0.4% | 0.4% |
| | EFKA PX 4703 | | | | | | | | |
| Phosphate (meth)acrylate | SR9050 | | | | | | | 1.0% | |
| | SR9051 | 0.8% | 1.0% | 1.5% | 2.0% | 4.0% | 0.2% | | |
| | SR9053 | | | | | | | | 1.0% |
| Hydrophilic monofunctional monomer | N,N-Dimethylacrylamide | 5.0% | 10.0% | 10.0% | 10.0% | 10.0% | 10.0% | 10.1% | 10.1% |
| | Acryloylmorpholine | 35.8% | 10.6% | 39.2% | 49.6% | 48.6% | 36.4% | 30.5% | 30.5% |
| | 4-Hydroxybutyl acrylate | 5.0% | | 10.0% | 10.0% | 10.0% | 10.0% | 10.0% | 10.0% |
| Amine-modified oligomer | CN371 | 0.5% | 0.5% | 0.5% | 0.5% | 0.5% | 0.5% | 0.5% | 0.5% |
| | Photomer 5006 | | | | | | | | |
| | EBECRYL 80 | | | | | | | | |
| Other multifunctional monomer | Pentaerythritol triacrylate | 15.0% | 20.0% | 10.0% | 10.0% | 10.0% | 10.0% | 10.0% | 10.0% |
| | 1,6-Hexanediol diacrylate | 20.0% | 25.0% | 10.0% | | | 15.0% | 20.0% | 20.0% |
| | Dipropylene glycol diacrylate | 5.0% | 20.0% | 5.0% | 5.0% | 4.0% | 5.0% | 5.0% | 5.0% |
| Photopolymerization initiator | TPO | 5.0% | 5.0% | 5.0% | 5.0% | 5.0% | 5.0% | 5.0% | 5.0% |
| | TPO-L | | | | | | | | |
| | Omnirad 819 | 2.0% | 2.0% | 2.0% | 2.0% | 2.0% | 2.0% | 2.0% | 2.0% |
| Sensitizer | DETX | 1.0% | 1.0% | 1.0% | 1.0% | 1.0% | 1.0% | 1.0% | 1.0% |

(continued)

| | | Example | | | | | | | |
|---|---|---|---|---|---|---|---|---|---|
| | | 1 | 2 | 3 | 4 | 5 | 6 | 7 | 8 |
| Polymerization inhibitor | UV-22 | 0.4% | 0.4% | 0.4% | 0.4% | 0.4% | 0.4% | 0.4% | 0.4% |
| Leveling agent | BYK-UV3500 | 0.5% | 0.5% | 0.5% | 0.5% | 0.5% | 0.5% | 0.5% | 0.5% |
| | Total | 100.0% | 100.0% | 100.0% | 100.0% | 100.0% | 100.0% | 100.0% | 100.0% |
| Hydrophilic monofunctional monomer/phosphate (meth)acrylate (mass ratio) | | 57 | 21 | 39 | 35 | 17 | 282 | 51 | 51 |
| Amount (parts by mass) of pigment dispersant based on 100 parts by mass of pigment | | 55 | 55 | 88 | 55 | 55 | 55 | 55 | 55 |
| Evaluation results | Storage stability | A | A | A | A | A | A | A | A |
| | Adhesion (PVC) | A | A | A | A | A | A | A | A |
| | Adhesion (coated paper) | A | A | A | A | A | A | A | A |
| | Water resistance | A | A | A | A | A | A | A | A |

[Table 2]

| | | Example | | | | | | | |
|---|---|---|---|---|---|---|---|---|---|
| | | 9 | 10 | 11 | 12 | 13 | 14 | 15 | 16 |
| Pigment | Pigment Yellow 155 | | | | | 2.3% | | | |
| | Pigment Red 122 | | | | | | 1.6% | | |
| | Pigment Red 254 | | | | | | 1.9% | | |
| | Pigment Blue 15:4 | 2.6% | 2.6% | 2.6% | 2.6% | | | | |
| | Pigment Black 7 | | | | | | | 1.6% | 1.6% |
| Pigment dispersant | Solsperse 56000 | 1.0% | 1.0% | | | 0.9% | 1.7% | 0.6% | 0.6% |
| | Solsperse 39000 | | | | 1.0% | | | | |
| | EFKA PX 4701 | 0.4% | | 1.0% | | 0.4% | 0.4% | 0.4% | 0.4% |
| | EFKA PX 4703 | | | | 0.4% | | | | |
| Phosphate (meth)acrylate | SR9050 | | | | | | | | |
| | SR9051 | 1.0% | 1.0% | 1.0% | 1.0% | 1.0% | 1.0% | 1.0% | 2.0% |
| | SR9053 | | | | | | | | |
| Hydrophilic monofunctional monomer | N,N-Dimethylacrylamide | 10.0% | 10.0% | 10.0% | 10.0% | 10.0% | 10.0% | 4.0% | |
| | Acryloylmorpholine | 30.6% | 31.0% | 31.0% | 30.6% | 42.0% | 40.0% | 41.0% | 10.0% |
| | 4-Hydroxybutyl acrylate | 10.0% | 10.0% | 10.0% | 10.0% | 10.0% | 3.0% | 10.0% | 4.0% |
| Amine-modified oligomer | CN371 | 0.5% | 0.5% | 0.5% | 0.5% | 0.5% | 0.5% | 0.5% | 0.5% |
| | Photomer 5006 | | | | | | | | |
| | EBECRYL 80 | | | | | | | | |
| Other multifunctional monomer | Pentaerythritol triacrylate | 10.0% | 10.0% | 10.0% | 10.0% | 10.0% | 10.0% | 10.0% | 10.0% |
| | 1,6-Hexanediol diacrylate | 20.0% | 20.0% | 20.0% | 20.0% | 10.0% | 16.0% | 11.0% | 41.0% |
| | Dipropylene glycol diacrylate | 5.0% | 5.0% | 5.0% | 5.0% | 4.0% | 5.0% | 10.0% | 20.0% |
| Photopolymerization initiator | TPO | | 5.0% | 5.0% | 5.0% | 5.0% | 5.0% | 5.0% | 5.0% |
| | TPO-L | 6.0% | | | | | | | |
| | Omnirad 819 | 1.0% | 2.0% | 2.0% | 2.0% | 2.0% | 2.0% | 2.0% | 2.0% |
| Sensitizer | DETX | 1.0% | 1.0% | 1.0% | 1.0% | 1.0% | 1.0% | 2.0% | 2.0% |

(continued)

| | | Example | | | | | | | |
|---|---|---|---|---|---|---|---|---|---|
| | | 9 | 10 | 11 | 12 | 13 | 14 | 15 | 16 |
| Polymerization inhibitor | UV-22 | 0.4% | 0.4% | 0.4% | 0.4% | 0.4% | 0.4% | 0.4% | 0.4% |
| Leveling agent | BYK-UV3500 | 0.5% | 0.5% | 0.5% | 0.5% | 0.5% | 0.5% | 0.5% | 0.5% |
| Total | | 100.0% | 100.0% | 100.0% | 100.0% | 100.0% | 100.0% | 100.0% | 100.0% |
| Hydrophilic monofunctional monomer/phosphate (meth)acrylate (mass ratio) | | 51 | 51 | 51 | 51 | 62 | 53 | 55 | 7 |
| Amount (parts by mass) of pigment dispersant based on 100 parts by mass of pigment | | 55 | 40 | 40 | 55 | 58 | 59 | 65 | 65 |
| Evaluation results | Storage stability | A | B | B | A | A | A | A | A |
| | Adhesion (PVC) | A | A | A | A | A | A | A | A |
| | Adhesion (coated paper) | A | A | A | A | A | A | A | A |
| | Water resistance | A | A | A | A | A | A | A | A |

[Table 3]

| | | Example | | | | | Comparative Example | | |
|---|---|---|---|---|---|---|---|---|---|
| | | 17 | 18 | 19 | 20 | 21 | 1 | 2 | 3 |
| Pigment | Pigment Yellow 155 | | | | | | | | |
| | Pigment Red 122 | | | | | | | | |
| | Pigment Red 254 | | | | | | | | |
| | Pigment Blue 15:4 | | | | | 2.6% | 2.6% | 2.6% | 2.6% |
| | Pigment Black 7 | 1.6% | 1.6% | 1.6% | 1.6% | | | | |
| Pigment dispersant | Solsperse 56000 | 0.6% | 0.6% | 0.6% | 0.6% | 1.0% | 1.0% | 1.0% | 0.9% |
| | Solsperse 39000 | | | | | | | | |
| | EFKA PX 4701 | 0.4% | 0.4% | 0.4% | 0.4% | 0.4% | 0.4% | 0.4% | |
| | EFKA PX 4703 | | | | | | | | |
| Phosphate (meth)acrylate | SR9050 | | | | | | | | |
| | SR9051 | 2.0% | 2.0% | 2.0% | 2.0% | 0.2% | | 4.5% | 1.5% |
| | SR9053 | | | | | | | | |
| Hydrophilic monofunctional monomer | N,N-Dimethylacrylamide | | | | | 20.0% | 10.0% | 15.0% | 10.0% |
| | Acryloylmorpholine | 10.0% | 10.0% | 10.0% | 10.0% | 23.4% | 42.4% | 40.9% | 41.4% |
| | 4-Hydroxybutyl acrylate | 4.0% | 4.0% | 4.0% | 4.0% | 20.0% | 10.0% | 15.0% | 10.0% |
| Amine-modified oligomer | CN371 | 5.0% | 14.0% | | | 0.5% | 0.5% | 0.5% | 0.5% |
| | Photomer 5006 | | | 5.0% | | | | | |
| | EBECRYL 80 | | | | 5.0% | | | | |
| Other multifunctional monomer | Pentaerythritol triacrylate | 10.0% | 10.0% | 10.0% | 10.0% | 10.0% | 10.0% | 10.0% | 10.0% |
| | 1,6-Hexanediol diacrylate | 36.5% | 36.5% | 36.5% | 36.5% | 8.0% | 10.0% | | 10.0% |
| | Dipropylene glycol diacrylate | 20.0% | 11.0% | 20.0% | 20.0% | 5.0% | 5.0% | 2.0% | 5.0% |
| Photopolymerization initiator | TPO | 5.0% | 5.0% | 5.0% | 5.0% | 5.0% | 5.0% | 5.0% | 5.0% |
| | TPO-L | | | | | | | | |
| | Omnirad 819 | 2.0% | 2.0% | 2.0% | 2.0% | 2.0% | 2.0% | 2.0% | 2.0% |
| Sensitizer | DETX | 2.0% | 2.0% | 2.0% | 2.0% | 1.0% | 0.2% | 0.2% | 0.2% |

(continued)

| | | Example | | | | | Comparative Example | | |
|---|---|---|---|---|---|---|---|---|---|
| | | 17 | 18 | 19 | 20 | 21 | 1 | 2 | 3 |
| Polymerization inhibitor | UV-22 | 0.4% | 0.4% | 0.4% | 0.4% | 0.4% | 0.4% | 0.4% | 0.4% |
| Leveling agent | BYK-UV3500 | 0.5% | 0.5% | 0.5% | 0.5% | 0.5% | 0.5% | 0.5% | 0.5% |
| Total | | 100.0% | 100.0% | 100.0% | 100.0% | 100.0% | 100.0% | 100.0% | 100.0% |
| Hydrophilic monofunctional monomer/phosphate (meth)acrylate (mass ratio) | | 7 | 7 | 7 | 7 | 317 | - | 16 | 41 |
| Amount (parts by mass) of pigment dispersant based on 100 parts by mass of pigment | | 65 | 65 | 65 | 65 | 55 | 55 | 55 | 35 |
| Evaluation results | Storage stability | A | A | A | A | A | A | C | C |
| | Adhesion (PVC) | A | A | A | A | A | C | A | A |
| | Adhesion (coated paper) | A | A | A | A | A | C | A | A |
| | Water resistance | A | A | A | A | C | A | A | A |

As shown in Comparative Example 1 in Table 3, the adhesion of a cured coating film of an ink composition containing no phosphate (meth)acrylate to a target base printing material was not sufficient. In contrast, as shown in each of Examples in Tables 1 to 3, ink compositions containing phosphate (meth)acrylates are excellent in adhesion of cured coating films to target base printing materials.

As shown in each of Examples in Tables 1 to 3, when the mass ratio of the hydrophilic monofunctional monomer to the phosphate (meth)acrylate is within a range of 5 to 400, the storage stability of the ink composition is improved. In addition, as shown in Examples 1 to 20, when the mass ratio of the hydrophilic monofunctional monomer to the phosphate (meth)acrylate is within a range of 5 to 300, the storage stability of the ink composition is improved, and a cured coating film having excellent water resistance is obtained.

In particular, as shown in each of Examples in Tables 1 to 3, it is demonstrated that when a pigment containing carbon black was used and/or when a photopolymerizable compound containing an amine-modified oligomer was used, it is advantageous to adjust the mass ratio of the hydrophilic monofunctional monomer to the phosphate (meth)acrylate in a range of 5 to 400.

As shown in Comparative Example 2 in Table 3, when the content of the phosphate (meth)acrylate based on the entire ink composition is greater than 4.3 mass%, the storage stability of the ink composition is not sufficient. In contrast, as shown in each of Examples in Tables 1 to 3, when the content of the phosphate (meth)acrylate based on the entire ink composition is in a range of 0.1 to 4.3 mass%, the storage stability of the ink composition is improved. It is demonstrated from the results of each of Examples in Tables 1 to 3 and Comparative Examples 1 and 2 in Table 3 that the phosphate (meth)acrylate tends to decrease the storage stability of the ink composition but a decrease in the storage stability can be suppressed by blending a certain amount or more of a hydrophilic monofunctional monomer.

As shown in Comparative Example 3 in Table 3, when the content of the pigment dispersant based on 100 parts by mass of the pigment is less than 38 parts by mass, the storage stability of the ink composition is not sufficient. In contrast, as shown in each of Examples in Tables 1 to 3, when the content of the pigment dispersant based on 100 parts by mass of the pigment is 38 to 100 parts by mass, the storage stability of the ink composition is improved.

As is obvious from Examples 2, 7, 8, and so on, the phosphate (meth)acrylate can impart the effect of improving the adhesion to the ink composition, and the pigment dispersion stability can be maintained by a hydrophilic monofunctional monomer, regardless of the type of phosphate (meth)acrylate, and even if the phosphate (meth)acrylate has one (meth)acrylate group or the phosphate (meth)acrylate has three (meth)acrylate groups.

As is obvious from the comparison of Example 1 and Example 9, it is demonstrated that the desired effects can be obtained even if the photopolymerization initiator is changed from TPO to TPO-L.

As is obvious from Examples 10 and 11, an ink composition containing one pigment dispersant can also secure storage stability, but the storage stability tended to decrease compared to the results of the ink compositions of Examples 1 to 9 and 12 to 21 containing a combination of two pigment dispersants having different amine values. Thus, the storage stability of an ink composition can be increased by combining pigment dispersants having different amine values.

As is obvious from comparison of Examples 1 to 12 and 21 and Examples 13 to 20, it is demonstrated that desired effects can be obtained regardless of the type of pigment.

Industrial Applicability

The photocurable ink composition for inkjet printing of the present invention can be used to form a cured coating film (printed layer) with high adhesion to a target base printing material regardless of the type of target base printing material, and also has high storage stability (including pigment dispersion stability) and is therefore easy to handle in printing. Thus, according to the present invention, the characteristics of various inkjet printing ink compositions can be improved.

## Claims

**1.** A photocurable ink composition for inkjet printing comprising a pigment, a pigment dispersant, a photopolymerization initiator, and a photopolymerizable compound, wherein

the photopolymerizable compound contains a hydrophilic monofunctional monomer and a phosphate (meth) acrylate,
the phosphate (meth)acrylate is included in an amount of 0.1 to 4.3 mass% based on the entire ink composition, and
the pigment dispersant is included in an amount of 38 to 100 parts by mass based on 100 parts by mass of the pigment.

**2.** The photocurable ink composition for inkjet printing according to claim 1, wherein

the pigment includes carbon black, and
a mass ratio of the hydrophilic monofunctional monomer to the phosphate (meth)acrylate is 5 to 400.

**3.** The photocurable ink composition for inkjet printing according to claim 1 or 2, wherein the photopolymerizable compound further contains an amine-modified oligomer.

**4.** The photocurable ink composition for inkjet printing according to claim 3, wherein a mass ratio of the hydrophilic monofunctional monomer to the phosphate (meth)acrylate is 5 to 400.

**5.** The photocurable ink composition for inkjet printing according to claim 4, wherein the amine-modified oligomer is included in an amount of 0.1 to 20 mass% based on the entire ink composition.

**6.** The photocurable ink composition for inkjet printing according to claim 1 or 2, wherein the hydrophilic monofunctional monomer contains at least one of an N-disubstituted (meth)acrylamide and a hydroxyl group-containing monofunctional monomer.

**7.** The photocurable ink composition for inkjet printing according to claim 1 or 2, wherein the pigment dispersant contains a basic group-containing pigment dispersant.

**8.** The photocurable ink composition for inkjet printing according to claim 1 or 2, wherein the pigment dispersant contains a pigment dispersant having an amine value of less than 40 mg KOH/g and a pigment dispersant having an amine value of 40 mg KOH/g or more.

**9.** The photocurable ink composition for inkjet printing according to claim 1 or 2, wherein the photopolymerizable compound further contains a multifunctional monomer other than the phosphate (meth) acrylate.

**10.** The photocurable ink composition for inkjet printing according to claim 1 or 2, wherein the phosphate (meth)acrylate contains a phosphate (meth)acrylate having three (meth)acrylate groups.

**INTERNATIONAL SEARCH REPORT**

International application No.
**PCT/JP2024/022789**

**A. CLASSIFICATION OF SUBJECT MATTER**

***C09D 11/326***(2014.01)i; ***B41J 2/01***(2006.01)i; ***B41M 5/00***(2006.01)i; ***C09D 11/38***(2014.01)i; ***C09D 11/101***(2014.01)i; ***C09D 11/324***(2014.01)i
FI: C09D11/326; B41J2/01 127; B41J2/01 501; B41M5/00 120; C09D11/101; C09D11/324; C09D11/38

According to International Patent Classification (IPC) or to both national classification and IPC

**B. FIELDS SEARCHED**

Minimum documentation searched (classification system followed by classification symbols)

C09D11/326; B41J2/01; B41M5/00; C09D11/38; C09D11/101; C09D11/324

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-537986 A (AGFA-GEVAERT) 21 December 2017 (2017-12-21)<br>entire text, all drawings | 1-10 |
| A | JP 2005-126540 A (UNION CHEMICAR CO., LTD.) 19 May 2005 (2005-05-19)<br>entire text, all drawings | 1-10 |
| A | CN 111320895 A (LUCKY HUAGUANG GRAPHICS CO., LTD.) 23 June 2020 (2020-06-23)<br>entire text, all drawings | 1-10 |
| A | JP 2020-164705 A (MAXELL HOLDINGS, LTD.) 08 October 2020 (2020-10-08)<br>entire text, all drawings | 1-10 |
| A | JP 2019-048984 A (JNC CORP.) 28 March 2019 (2019-03-28)<br>entire text, all drawings | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 August 2024** | **03 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**

International application No.
**PCT/JP2024/022789**

**C. DOCUMENTS CONSIDERED TO BE RELEVANT**

| Category* | Citation of document, with indication, where appropriate, of the relevant passages | Relevant to claim No. |
|---|---|---|
| A | JP 2014-224233 A (RICOH COMPANY, LTD.) 04 December 2014 (2014-12-04)<br>entire text, all drawings | 1-10 |
| A | JP 2014-015541 A (DAINICHISEIKA COLOR & CHEMICALS MFG. CO., LTD.) 30 January 2014 (2014-01-30)<br>entire text, all drawings | 1-10 |
| P, X | JP 7340306 B1 (SAKATA INX CORP.) 07 September 2023 (2023-09-07)<br>claims 1-7, paragraph [0014], example 15, table 2 | 1-10 |

Form PCT/ISA/210 (second sheet) (July 2022)

**INTERNATIONAL SEARCH REPORT**
**Information on patent family members**

International application No.
**PCT/JP2024/022789**

| Patent document cited in search report | Publication date (day/month/year) | Patent family member(s) | Publication date (day/month/year) |
|---|---|---|---|
| JP 2017-537986 A | 21 December 2017 | US 2017/0218213 A1<br>WO 2016/050371 A1<br>EP 3000853 A1<br>CN 106715607 A | |
| JP 2005-126540 A | 19 May 2005 | (Family: none) | |
| CN 111320895 A | 23 June 2020 | (Family: none) | |
| JP 2020-164705 A | 08 October 2020 | (Family: none) | |
| JP 2019-048984 A | 28 March 2019 | WO 2015/080155 A1<br>CN 105765010 A | |
| JP 2014-224233 A | 04 December 2014 | US 2014/0320572 A1<br>CN 104119726 A | |
| JP 2014-015541 A | 30 January 2014 | (Family: none) | |
| JP 7340306 B1 | 07 September 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006328227 A
- JP 2012162615 A
- JP 2001059906 A
- JP 54037082 A
- JP 1311177 A
- JP 2000612 A
- JP 4210220 A
- JP 9087537 A
- JP 9194585 A
- JP 1164429 A
- WO 2004000950 A
- JP 2005055814 A
- JP 2006257243 A
- JP 2006176657 A
- JP 2009175613 A
- JP 2010107965 A